# EUROPÄISCHE PATENTSCHRIFT

(11) **EP 0 483 934 B1**
(45) Veröffentlichungstag und Bekanntmachung des Hinweises auf die Patenterteilung: **27.07.1994**
(21) Anmeldenummer: 91250269.7
(22) Anmeldetag: 02.10.1991
(51) Int. Cl.: H01B 9/06

(54) **Einpoliger gasisolierter Leitungskanal**
Single-pole gas isolated duct
Caniveau à isolation gazeuse unipolaire

(30) Priorität: 30.10.1990 DE 4034733
(43) Veröffentlichungstag der Anmeldung: 06.05.1992
(73) Patentinhaber: SIEMENS AKTIENGESELLSCHAFT, 80333 München (DE)
(72) Erfinder: Poth, Rainer, W-6368 Bad Vilbel (DE)

(56) Entgegenhaltungen:
- DE-A- 3 240 786
- DE-U- 8 512 872

## Beschreibung

Die Erfindung betrifft einen einpoligen gasisolierten Leitungskanal mit einem Mantelrohr und einem rohrförmigen, durch Stützisolatoren in dem Mantelrohr zentrisch gehaltenen Innenleiter, bei dem das Mantelrohr in mit Flanschen versehene Abschnitte und der Innenleiter gleichfalls in miteinander mechanisch und elektrisch verbundene Abschnitte unterteilt ist. Ein Leitungskanal dieser Art ist beispielsweise durch das DE-U-85 12 872 bekannt geworden. Es ist zu erwähnen, daß ein solcher Gegenstand auch als gasisoliertes und einphasig metallgekapseltes Rohrgaskabel oder als gasisolierte Stromschiene bzw. Rohrschiene bezeichnet werden kann. Anwendungsgebiet solcher Anordnungen sind vorzugsweise relativ kurze Verbindungsstrecken zwischen mit einem gegenseitigen Abstand aufgestellten Teilen einer gasisolierten Mittel- oder Hochspannungs-Schaltanlage oder zwischen einer solchen Schaltanlage und einem zugeordneten Transformator. Die Verwendung eines Leitungskanals der angegebenen Art erscheint im Vergleich zur Anwendung eines Hochspannungskabels insofern vorteilhaft, als ein übliches Kabel Durchführungen erfordert, deren äußerer Teil mit Rücksicht auf die geringere Isolationsfestigkeit der Luft eine verhältnismäßig große Länge aufweisen. Wird dagegen das in der Regel zur Isolierung der Anlagenteile benutzte Gas, z. B. Schwefelhexafluorid, benutzt, so entfällt diese Beschränkung und es genügen als Durchführungen solche der bekannten scheiben- oder sternförmigen Bauart.

Da die bauliche Gestaltung des Aufstellungsortes einer Schaltanlage der erwähnten Art von Fall zu Fall sehr unterschiedlich sein kann, besteht die Schwierigkeit, dem im Unterschied zu einem Kabel starren Leitungskanal zwischen die Anlagenteile einzufügen. Hiervon ausgehend liegt der Erfindung die Aufgabe zugrunde, Komponenten eines Leitungskanales zu schaffen, aus denen sich die benötigte gasisolierte Verbindungsleitung auf möglichst einfache Weise zusammenstellen läßt.

Diese Aufgabe wird gemäß der Erfindung durch folgende Merkmale gelöst:
a) Die Stützisolatoren besitzen radial abstehende Arme mit darin eingebetteten abgerundeten Elektrodenkörpern,
b) an ihrem inneren Umfang besitzen die Stützisolatoren eine Metallhülse, die wenigstens eine Öffnung zum Eingreifen eines an dem rohrförmigen Innenleiter angebrachten Raststückes besitzt,
c) zur Aufnahme in einer zwischen zwei aneinanderstoßenden Flanschen von Abschnitten des Metallrohres gebildeten Nut sind die Elektrodenkörper über den Umfang der Arme eines Stützisolators verlängert ausgebildet und
d) zur Verwendung im Bereich zwischen den Flanschen eines Abschnittes des Mantelrohres sind die Elektrodenkörper etwa bündig mit der Umfangsfläche der Arme eines Stützisolators angeordnet und mit einem federnden, vorstehend Kontaktstück versehen.

Somit stehen zwei nur hinsichtlich der Elektrodenkörper unterschiedliche Ausführungen von Stützisolatoren zur Verfügung, wodurch sich beliebig lange Abschnitte eines Leitungskanales herstellen lassen. Werden beispielsweise kurze Abschnitte eines Leitungskanales benötigt, so genügt es, den Innenleiter im Bereich der aneinanderstoßenden Flansche der Abschnitte des Mantelrohres abzustützen. Bei längeren Abschnitten von Mantelrohren können dagegen zusätzlich die mit federnden Kontaktstücken versehenen Stützisolatoren verwendet werden. Die Elektrodenkörper in den Armen des Stützisolators werden durch die Kontaktgabe mit der Innenwandung des Mantelrohres zuverlässig zur Wirkung gebracht. Die axiale Festlegung des Innenleiters relativ zu den Stützisolatoren wird auf einfachste Weise durch selbsttätig wirkende Raststücke erzielt. Ein Leitungskanal nach der Erfindung läßt sich somit an Ort und Stelle aus den bereitgestellten Komponenten - Abschnitte von Mantelrohren mit Flanschen, rohrförmige Innenleiter und zwei Typen von Stützisolatoren - baukastenartig zusammensetzen.

Ein zuverlässiger Stromübergang trotz des Auftretens von Wärmedehnungen kann dadurch gewährleistet sein, daß zur elektrisch leitenden Verbindung von zwei aneinanderstoßenden Abschnitten des Innenleiters in wenigstens je einer jedem Abschnitt zugeordneten Nut eines in die Abschnitte einführbaren Kupplungsstückes ein Vielflächen-Gleitkontaktelement angeordnet ist. Derartige Gleitkontaktelemente sind in einer Reihe verschiedener Ausführungen bekannt und bedürfen daher im vorliegenden Zusammenhang keiner näheren Erläuterung.

Das erwähnte Raststück kann radial nach außen federnd geführt und in den Innenraum des Innenleiters hineinragend angeordnet sein, wobei das Kupplungsstück eine Ausnehmung für den nach innen überstehenden Teil des Raststückes besitzt. Auf diese Weise werden das Kupplungsstück gegenüber dem Innenleiter und dieser gegenüber dem Stützisolator fixiert. Da es ausreichend ist, wenn ein Abschnitt des Innenleiters an einer Stelle gegen axiale Verschiebung gesichert ist, wird der Vorteil erreicht, daß eine Längenänderung infolge einer Erwärmung durch den Betriebsstrom ungehindert möglich ist. Vorzugsweise können daher die Abschnitte des Innenleiters so bemessen sein, daß ein zur Aufnahme von Wärmedehnungen geeigneter Zwischenraum verbleibt.

Die vorstehend erläuterten Gestaltungsmerkmale eines Leitungskanales der angegebenen Art gestatten es somit, gerade Verbindungen zwischen Anlagenteilen herzustellen. Gelegentlich tritt jedoch auch die Aufgabe auf, gegeneinander versetzte Anschlußstellen miteinander zu verbinden. Nach einer weiteren Ausgestaltung der Erfindung können auch rechtwinklig zueinander stehende Abschnitte des Mantelrohres und des Innenleiters miteinander verbunden werden, und zwar durch ein Mantelrohr-Eckstück bzw. ein Kupplungs-Eckstück, wobei das Kupplungs-Eckstück mit den zu verbindenden Abschnitten des Innenleiters über Vielflächen-Gleitkontaktelemente in Verbindung steht und über einen Stützisolator zentrisch gehalten ist. Auf diese Weise ist auch im Bereich der rechtwinkligen Umlenkung für ungehinderte Wärmedehnungen gesorgt.

Das Kupplungs-Eckstück für die Abschnitte des Innenleiters kann aus zwei rechtwinklig verbundenen Teilstücken bestehen, wobei zur Halterung des einen Teilstückes in dem Stützisolator zwischen dessen Metallhülse und dem Teilstück ein Innenleiterersatzstück eingefügt ist. Dieses braucht nur etwa die axiale Länge der Metallhülse aufzuweisen oder kann etwas länger und mit abgerundeten Kanten ausgeführt sein.

Die Erfindung wird im folgenden anhand der Figuren näher erläutert.

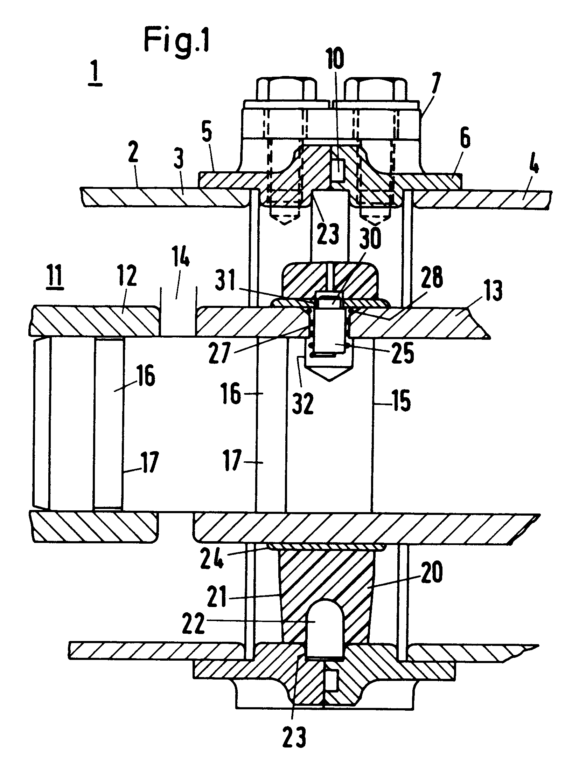

Die Figur 1 zeigt in einem Längsschnitt zwei aneinanderstoßende Abschnitte eines Mantelrohres und eines Innenleiters.

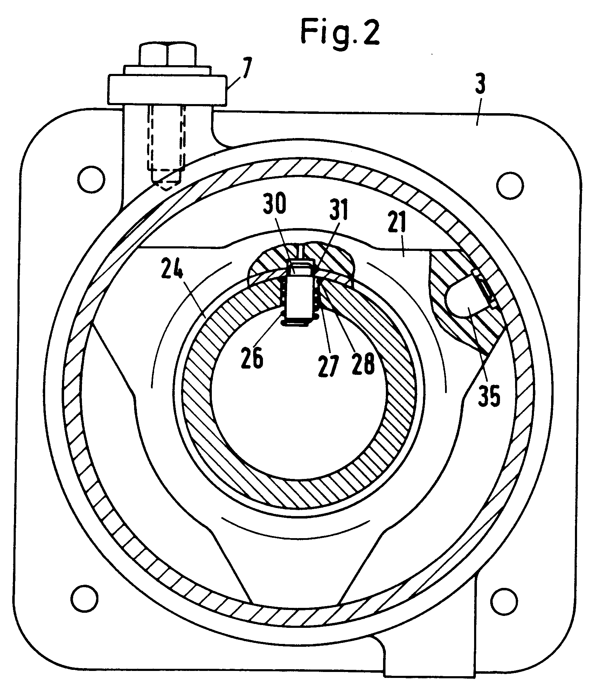

Ein Querschnitt durch einen Abschnitt eines Mantelrohre und eines Innenleiters sowie einen teilweise geschnittenen Stützisolator zeigt die Figur 2.

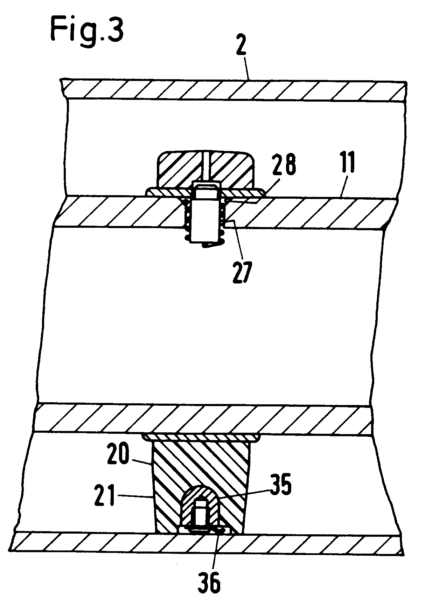

Einen Längsschnitt durch die Teile gemäß der Figur 2 zeigt die Figur 3.

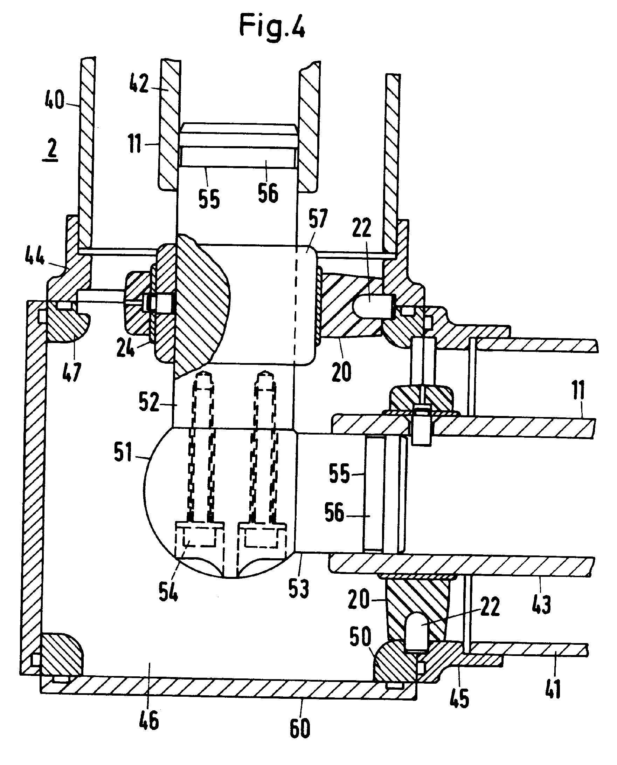

Eine Anordnung zur rechtwinkligen Verbindung von zwei Abschnitten eines Mantelrohres und eines Innenleiters ist im Schnitt in der Figur 4 dargestellt.

In der Figur 1 ist ein Teil eines metallgekapselten, gasisolierten Leitungskanales 1 gezeigt, der ein Mantelrohr 2 aufweist. Das Mantelrohr 2 ist in mehrere Abschnitte unterteilt, von denen in der Figur 1 zwei Abschnitte 3 und 4 gezeigt sind, deren Enden mit je einem Flansch 5 bzw. 6 versehen sind. Eine Leitungsbrücke 7 sorgt für eine widerstandsarme elektrische Verbindung der Abschnitte 3 und 4. Eine in eine Nut des Flansches 6 eingelegten Rundschnurdichtung 10 gestattet eine gasdichte Verbindung der Abschnitte 3 und 4.

Der Leitungskanal 1 weist ferner einen Innenleiter 11 auf, der gleichfalls in Abschnitte unterteilt ist. Der Innenleiter 11 ist rohrförmig ausgebildet, wobei zwischen den Abschnitten 12 und 13 ein axialer Abstand 14 besteht, der bei Erwärmung eine ungehinderte relative Verschiebung der Abschnitte 12 und 13 gestattet. Zur elektrisch leitenden Verbindung der Abschnitte 12 und 13 dient ein Kupplungsstück 15, das an seinem Umfang zwei Vielflächen-Gleitkontaktelemente 16 aufweist. Es kann sich hierbei um ein beliebiges geeignetes Kontaktelement handeln, beispielsweise um ein in der DE-B-21 65 389, Figur 4, vergrößert dargestelltes Element. Durch Aufnahme in jeweils einer Nut 17 sind die Gleitkontaktelemente 16 gegen seitliche Verschiebung gesichert.

Zur Abstützung des Innenleiters 11 gegenüber dem Mantelrohr 2 ist ein Stützisolator 20 vorgesehen, der in bekannter Weise aus einem isolierenden Kunststoff hergestellt sein kann. Wie näher besonders der Figur 2 zu entnehmen ist, weist der Stützisolator 20 drei Arme 21 auf, deren Umfangsfläche dem Innendurchmesser des Mantelrohres 2 bzw. der Abschnitte 3 und 4 angepaßt ist. In jedem der Arme 21 ist ein Elektrodenkörper 22 eingeformt oder anderweitig befestigt, dessen zum Zentrum der Anordnung weisendes Ende zur Vergleichmäßigung des elektrischen Feldes abgerundet ausgebildet ist. Außen steht der Elektrodenkörper 22 über die Umfangsfläche des zugehörigen Armes 21 vor und ragt mit diesem überstehenden Teil in eine Nut 23 hinein, die durch entsprechende Ausnehmungen der aneinander anliegenden Flansche 5 und 6 gebildet ist. Der Stützisolator 20 ist auf diese Weise gegenüber den Abschnitten 3 und 4 des Mantelrohres 1 axial festgelegt und ist durch elektrisch leitende Verbindung der Elektrodenkörper 20 durch Einklemmen zwischen den Flanschen 5 und 6 dielektrisch entlastet.

An seinem inneren Umfang besitzt der Stützisolator 20 eine Metallhülse 24 deren Innendurchmesser dem Außendurchmesser der Abschnitte 12 und 13 des Innenleiters 11 angepaßt ist.

Nahe seinem Ende ist der Abschnitt 13 des Innenleiters 11 mit einem Raststück 25 versehen. Das Raststück 25 ist stift- oder bolzenförmig ausgebildet und steht unter der Wirkung einer Schraubenfeder 26, die sich mit einer Windung mit erweiterten Durchmesser in einer konischen Einsenkung 28 einer Öffnung 27 am Umfang des Abschnittes 13 abstützt und die am entgegengesetzten Ende mit einem abgebogenen Endschenkel am inneren Ende des Raststückes 25 anliegt (Fig. 2). Dieses wird unter der Wirkung der Feder radial nach außen gedrückt. Wie den Figuren 1 und 2 zu entnehmen ist, greift ein über die Umfangsfläche des Abschnittes 13 überstehender Zapfen 30 des Raststückes 25 in eine Öffnung 31 der Metallhülse 24 ein. Hierdurch ist der Abschnitt 13 gegen axiale Verschiebung gegenüber den Stützisolator 20 gesichert. Ferner besitzt das Kupplungsstück 15 eine Ausnehmung 32 (Fig 1), in die das dem Zapfen 30 gegenüberliegende Ende des Raststückes eintaucht. Auf diese Weise ist auch das Kupplungsstück 15 an einer axialen Verschiebung gegenüber den Abschnitt 13 gehindert.

Bei Abschnitten des Mantelrohres 1, die eine gewisse Länge nicht überschreiten, kann es ausreichend sein, den zugehörigen Abschnitt des Innenleiters 11 nur im Bereich der Flansche, d. h. nahe den Enden des betreffenden Abschnittes des Mantelrohres 2 abzustützen, wie dies in der Figur 1 gezeigt ist. Werden jedoch auch längere Abschnitte benötigt, so kann es zweckmäßig sein, den Innenleiter zusätzlich auch an einer oder mehreren weiteren Stellen gegenüber dem Abschnitt des Mantelrohres 2 abzustützen. Hierzu sind die bereits erläuterten Stützisolatoren 20 prinzipiell gleichfalls geeignet. Es empfiehlt sich lediglich, anstelle der in der Figur 1 gezeigten Elektrodenkörper 22 die in der Figur 3 gezeigten verkürzten Elektrodenkörper 35 zu verwenden, die über die Umfangsfläche der Arme 21 des Stützisolators 20 nicht überstehen. Jedoch ist ein federndes und radial vorstehendes Kontaktstück 36 vorgesehen, das bei der Einführung des Stützisolators 20 in den Abschnitt des Mantelrohres die Kontaktgabe zwischen dem Mantelrohr und dem Elektrodenkörper 35 und damit die dielektrische Entlastung des Stützisolators 20 gewährleistet. Wird der Innenleiter in gewissen Abständen mit außen konisch gesenkten Öffnungen 27 versehen, so können die Stützisolatoren 20 mittels der beschriebenen Raststücke 25 axial gesichert werden.

Die vorstehend beschriebenen Komponenten gestatten es, kurze und relativ lange geradlinige Verbindungen zwischen Komponenten einer Mittel- oder Hochspannungsschaltanlage herzustellen. Sind jedoch die zu verbindenden Anschlußpunkte gegeneinander versetzt, so kann mittels der in der Figur 4 gezeigten Anordnung eine einfache oder mehrfache rechtwinklige Umlenkung erzielt werden. In der Figur 4 sind ein Abschnitt 40 und ein hierzu rechtwinklig stehender Abstand 41 eines Mantelrohres sowie ein Abschnitt 42 und ein hierzu rechtwinklig stehender Abschnitt 43 eines Innenleiters gezeigt, die mechanisch und elektrisch miteinander verbunden sind. Die Abschnitte 40 und 41 des Mantelrohres sind in gleicher Weise, wie dies anhand der Figur 1 erläutert wurde, mit je einem Flansch 44 bzw. 45 versehen. Mit diesen Flanschen ist ein Mantelrohr-Eckstück 46 verbunden, das gleichfalls Flansche 47 und 50 besitzt. Ebenso sind entsprechend der Figur 1 im Bereich der Flansche 44 und 47 sowie 45 und 50 Stützisolatoren 20 vorgesehen, deren Elektrodenkörper 22 in Ausnehmungen bzw. Nuten zwischen den erwähnten Flanschen aufgenommen sind.

Zur Verbindung der Abschnitte 42 und 43 des Innenleiters dient ein Kupplungs-Eckstück 51, das aus zwei rechtwinklig verbundenen Teilstücken 52 und 53 mittels Schrauben 54 zusammengesetzt ist. Jedes der Teilstücke 52 und 53 ist mit einer Nut 55 zur Aufnahme eines Vielflächen-Gleitkontaktelementes 56 der bereits erwähnten Art versehen. Der Abschnitt 42 des Innenleiters endet bei der Anordnung gemäß der Figur 4 oberhalb des zwischen die Flansche 44 und 47 eingefügten Stützisolators 20. Durch ein Innenleiter-Ersatzstück 57 ist dafür gesorgt, daß das Teilstück 52 des Kupplungs-Eckstückes 51 dennoch den gewünschten mechanischen Halt in dem Stützisolator 20 findet. Ein Raststück 25 sorgt in der schon beschriebenen Weise für die gegenseitige axiale Sicherung zwischen dem Teilstück 52, dem Innenleiter-Ersatzstück 57 und dem Stützisolator 20. Das Mantelrohr-Eckstück 46 kann so ausgebildet sein, daß wenigstens in der Richtung der Schrauben 54 freier Zugang von Außen nach Abnahme eines Verschlußdeckels (60) besteht.

Wie die vorstehende Beschreibung erkennen läßt, läßt sich ein Leitungskanal aus den beschriebenen Komponenten baukastenartig mit geringem Aufwand an Montagearbeit zusamensetzen. Abschnitte des Mantelrohres, Abschnitte des Innenleiters, Durchführungen und Kupplungsstücke bilden dabei die wichtigsten Teile. Werden zwei Abschnitte des Mantelrohres zusammengefügt, so wird hierbei auch ein Stützisolator montiert. Ein zugehöriger Abschnitt des Innenleiters läßt sich durch die Metallhülse des Stützisolators bis zum Einrasten des Raststückes 25 hindurchschieben. Damit ist zugleich ein Kupplungsstück befestigt. Der folgende Abschnitt des Innenleiters wird lediglich auf das Ende des Kupplungsstückes aufgesteckt und ist hierdurch mechanisch zentriert und über die Gleitkontaktelemente elektrisch verbunden.

## Patentansprüche

1. Einpoliger gasisolierter Leitungskanal (1) mit einem Mantelrohr (2) und einem rohrförmigen, durch Stützisolatoren (20) zentrisch in dem Mantelrohr (2) gehaltenen Innenleiter (11), bei dem das Mantelrohr (2) in mit Flanschen (5, 6, 44, 45) versehene Abschnitte (3, 4, 40, 41) und der Innenleiter (11) gleichfalls in miteinander mechanisch und elektrisch verbundene Abschnitte (12, 13, 42, 43) unterteilt ist,
**gekennzeichnet** **durch** folgende Merkmale:
a) Die Stützisolatoren (20) besitzen radial abstehende Arme (21) mit darin eingebetteten abgerundeten Elektrodenkörpern (22, 35),
b) an ihrem inneren Umfang besitzen die Stützisolatoren (20) eine Metallhülse (24), die wenigstens eine Öffnung (31) zum Eingreifen eines an dem rohrförmigen Innenleiter (11) angebrachten Raststückes (25) besitzt,
c) zur Aufnahme in einer zwischen zwei aneinanderstoßenden Flanschen (5, 6) von Abschnitten (3, 4) des Mantelrohres (2) gebildeten Nut (23) sind die Elektrodenkörper (22) über den Umfang der Arme (21) eines Stützisolators (20) verlängert ausgebildet, und
d) zur Verwendung im Bereich zwischen den Flanschen (2, 3) eines Abschnittes (3, 4) des Mantelrohres (2) sind die Elektrodenkörper (35) etwa bündig mit der Umfangsfläche der Arme (21) eines Stützisolators (20) angeordnet und mit einem federnden, vorstehenden Kontaktstück (36) versehen.

2. Leitungskanal nach Anspruch 1, **dadurch** **gekennzeichnet,** daß zur elektrisch leitenden Verbindung von zwei aneinanderstoßenden Abschnitten (12, 13, 42, 43) des Innenleiters (11) in wenigstens je einer jedem Abschnitt (12, 13, 42, 43) zugeordneten Nut (17, 55) eines in die Abschnitte einführbaren Kupplungsstückes (15) ein Vielflächen-Gleitkontaktelement (16, 56) angeordnet ist.

3. Leitungskanal nach Anspruch 2, **dadurch** **gekennzeichnet,** daß das Raststück (25) radial nach außen federnd geführt und radial in den Innenraum des Innenleiters (11) hineinragend angeordnet ist und daß das Kupplungsstück (15) eine Ausnehmung (32) für den nach innen überstehenden Teil des Raststückes (25) besitzt.

4. Leitungskanal nach einem der vorangehenden Ansprüche, **dadurch gekennzeichnet,** daß zur Verbindung rechtwinklig zueinander stehender Abschnitte (40, 41; 42, 43) des Mantelrohres (2) und des Innenleiters (11) ein Mantelrohr-Eckstück (46) bzw. ein Kupplungs-Eckstück (51) vorgesehen sind, wobei das Kupplungs-Eckstück (51) mit den zu verbindenden Abschnitten (42, 43) des Innenleiters (2) über Vielflächen-Gleitkontaktelemente (56) in Verbindung steht und über einen Stützisolator (20) zentrisch gehalten ist.

5. Leitungskanal nach Anspruch 4, **dadurch** **gekennzeichnet,** daß das Kupplungs-Eckstück (51) für die Abschnitte (42, 43) des Innenleiters (11) aus zwei rechtwinklig verbundenen Teilstücken (52, 53) besteht und daß zur Halterung des einen Teilstückes (52) in dem Stützisolator (20) zwischen dessen Metallhülse (24) und dem Teilstück (52) ein Innenleiter-Ersatzstück (57) eingefügt ist.

## Claims

1. A single-pole gas isolated duct (1) with an outer sleeve (2) and a tubular inner conductor (11) held centrally in the outer sleeve (2) by support isolators (20), wherein the outer sleeve (2) is divided into sections (3, 4, 40, 41) provided with flanges (5, 6, 44, 45) and the inner conductor is likewise divided into sections (12, 13, 42, 43) connected to one another mechanically and electrically, characterised by the following features:
a) the support isolators (20) comprise radially projecting arms (21) with rounded electrode elements (22, 35) embedded therein,
b) at their inner circumference, the support isolators (20) comprise a metal sleeve (24), which comprises at least one opening (31) for the engagement of a locking element (25) fitted to the tubular inner conductor (11),
c) for their accommodation in a groove (23) formed between two abutting flanges (5, 6) of sections (3, 4) of the outer sleeve (2), the electrode elements (22) are extended beyond the circumference of the arms (21) of a support isolator (20), and
d) for use in the region between the flanges (2, 3) of a section (3, 4) of the outer sleeve (2), the electrode elements (35) are arranged so that they are approximately flush with the circumferential surface of the arms (21) of a support isolator (20) and are provided with a resilient, projecting contact element (36).

2. A duct according to claim 1, characterised in that, for the electrically conductive connection of two abutting sections (12, 13, 42, 43) of the inner conductor (11), a polyhedral sliding contact element (16, 56) is arranged in at least one groove (17, 55) - associated with each section (12, 13, 42, 43)- in a coupling element (15) which can be introduced into the sections.

3. A duct according to claim 2, characterised in that the locking element (25) is guided so as to be resilient towards the outside and is arranged so as to project radially into the inner chamber of the inner conductor (11), and the coupling element (15) comprises a recess (32) for the part of the locking element (25) projecting inwards.

4. A duct according to one of the preceding claims, characterised in that an outer sleeve corner element (46) and a coupling corner element (51) are provided for connecting sections (40, 41; 42, 43) of the outer sleeve (2) and the inner conductor (11) arranged at right angles to one another, the coupling corner element (51) being connected to the sections (42, 43) of the inner conductor which are to be joined by means of polyhedral sliding contact elements (56) and being held centrally by means of a support isolator (20).

5. A duct according to claim 4, characterised in that the coupling corner element (51) for the sections (42, 43) of the inner conductor (11) is formed by two parts (52, 53) connected at right angles, and an inner conductor replacement element (57) is inserted between the metal sleeve (24) of the support isolator (20) and the part (52) in order to secure the said part (52) in the support isolator (20).

## Revendications

1. Caniveau unipolaire à isolation gazeuse (1), comportant un tube enveloppe (2) et un conducteur intérieur (11) tubulaire maintenu centré dans le tube enveloppe (2) par des supports isolants (20), dans lequel le tube enveloppe (2) est subdivisé en tronçons (3, 4, 40, 41) munis de brides (5, 6, 44, 45), le conducteur intérieur (11) étant également subdivisé en tronçons (12, 13, 42, 43) reliés entre eux mécaniquement et électriquement, caractérisé par les particularités suivantes :
a) les supports isolants (20) comportent des bras (21) en saillie radiale ayant des pièces d'électrode arrondies (22, 35) qui y sont encastrées,
b) les supports isolants (20) comportent, sur leur périphérie intérieure, une douille métallique (24) qui présente au moins une ouverture (31) pour recevoir une pièce d'arrêt (25) montée sur le conducteur intérieur tubulaire (11),
c) les corps d'électrode (22) sont conçus prolongés au-delà de la périphérie des bras (21) d'un support isolant (20) afin d'être logés dans une rainure (23) formée entre deux brides (5, 6) contiguës de tronçons (3, 4) du tube enveloppe (2), et
d) pour une utilisation dans une zone entre les brides (2, 3) d'un tronçon (3, 4) du tube enveloppe (2), les piècces d'électrode (35) sont disposées à peu près à affleurement avec la surface périphérique des bras (21) d'un support isolant (20) et sont munies d'un plot de contact (36) à ressort.

2. Caniveau selon la revendication 1, caractérisé en que, pour une connexion électroconductrice de deux segments contigus (12, 13, 42, 43) du conducteur intérieur (11), un élément de contact glissant polyédrique (16, 56) est disposé dans au moins chaque fois une rainure (17, 55) associée à chaque tronçon (12, 13, 42, 43), d'une pièce de jonction (15) propre à être insérée dans les tronçons.

3. Caniveau selon la revendication 2, caractérisé en ce que la pièce d'arrêt (25) est guidée élastiquement radialement vers l'extérieur et en saillie radialement à l'intérieur du conducteur intérieur (11), et en ce que la pièce de jonction (15) présente un évidement (32) pour la partie de la pièce d'arrêt (25) qui est en saillie vers l'intérieur.

4. Caniveau selon l'une des revendications précédentes, caractérisé en ce qu'il est prévu, pour relier des tronçons (40, 41 ; 42, 43) du tube enveloppe (2) et du conducteur intérieur (11), qui sont à angle droit entre eux, un coude de tube enveloppe (46) ou un coude de raccordement (51), le coude de raccordement (51) étant en communication avec les tronçons (42, 43) du conducteur intérieur (2) à relier, par l'intermédiaire d'éléments de contact glissant polyédriques (56) et étant maintenu de manière centrée par l'intermédiaire d'un support isolant (20).

5. Caniveau selon la revendication 4, caractérisé en ce que le coude de raccordement (51) pour les tronçons (42, 43) du conducteur intérieur (11) consiste en deux éléments (52, 53) reliés à angle droit et en ce que, pour la fixation de l'élément (52) dans le support isolant (20), une pièce de substitution de conducteur intérieur (57) est insérée entre la douille métallique (24) de celui-ci et l'élément (52).
